# EUROPEAN PATENT APPLICATION

(11) **EP 3 733 877 A1**
(43) Date of publication of application: **04.11.2020**
(21) Application number: 18897702.9
(22) Date of filing: 20.12.2018
(51) Int. Cl.: C21D 1/74, C21D 1/18, C21D 1/63, C21D 9/40

(54) **WORKPIECE HEAT TREATMENT METHOD AND HEAT TREATMENT DEVICE**

(30) Priority: 25.12.2017 JP 2017247869
(71) Applicant: NTN Corporation, Osaka-shi, Osaka 550-0003 (JP)
(72) Inventor: MANO Yoshiya, Iwata-shi Shizuoka 438-8510 (JP); SUZUKI Shintaro, Iwata-shi Shizuoka 438-8510 (JP)
(74) Representative: Eder Schieschke & Partner mbB
(86) International application number: PCT/JP2018/047023
(87) International publication number: WO 2019/131446

(57) **Abstract**

A workpiece heat treatment method of the present invention includes a heating step S2 for a workpiece and a cooling step S3 of cooling the workpiece W that has been heated in the heating step S2 by immersing the workpiece in a cooling liquid 36, and performing a predetermined heat treatment on the workpiece, and further includes a preparation step S 1 of making an atmosphere in a sealed space D into a non-oxidizing atmosphere before the heating step S2 to be in a state where the workpiece can be carried into the sealed space D. In the preparation step S1, a non-oxidizing gas Ga is supplied to the sealed space D and the sealed space D is exhausted simultaneously, and the supply and exhaust are controlled in accordance with an air pressure in the sealed space D, and thus the atmosphere in the sealed space D is replaced with the non-oxidizing atmosphere.

## Description

### TECHNICAL FIELD

The present invention relates to a workpiece heat treatment method and a workpiece heat treatment device, and particularly to a technique for performing a predetermined heat treatment by heating and then cooling a workpiece.

### BACKGROUND ART

For example, in a manufacturing process of an annular member including a steel material such as SUJ2, for example, a bearing ring of a rolling bearing, a heat treatment (quenching and hardening treatment) for imparting a required mechanical strength and the like to the annular member is performed. This heat treatment includes a heating step of performing a heating treatment in which a base material (annular workpiece) of the annular member is heated to a target temperature, and a cooling step of performing a cooling treatment in which the heated workpiece is cooled and quenched. The heating step can be executed using an atmospheric heating furnace such as a mesh belt type continuous furnace or an induction heating device. In particular, induction heating can directly heat only the workpiece, and thus high energy efficiency can be achieved. Furthermore, there is an advantage that a compact heat treatment device can be provided.

By the way, when the above-mentioned heating treatment or cooling treatment for the workpiece is performed in an atmosphere where oxygen is present, an oxidized scale is generated on a surface of the workpiece with a high probability. The oxidized scale generated on the workpiece surface not only degrades appearance quality by depriving the workpiece of brilliance, but also can cause contamination. The oxidized scale is therefore preferably removed completely by an appropriate means such as polishing, grinding, or shot blasting. However, it is not easy to completely remove the oxidized scale. In particular, when the oxidized scale is generated on the workpiece surface having a complicated shape with minute holes or irregularities, it takes significantly excessive processing to completely remove the oxidized scale. Thus, when the generation of the oxidized scale due to the heat treatment is a problem, for example, as disclosed in Patent Literature 1 and 2, a series of heat treatment steps including the heating treatment and the cooling treatment are preferably performed in a non-oxidizing atmosphere.

However, in the heat treatment devices disclosed in Patent Literature 1 and 2, a heating part that inductively heats a workpiece to a target temperature and a cooling part that cools the heated workpiece are provided vertically in a container that can have a non-oxidizing atmosphere therein. One workpiece held by an appropriate means is inductively heated to a target temperature in the heating part, and then the heated workpiece is lowered to a position where the cooling part is disposed. The workpiece is cooled and quenched by a cooling liquid sprayed toward the workpiece. In the heat treatment devices having such a configuration, no treatment can be performed on a following workpiece until the heat treatment (heating and cooling after heating) on the one workpiece is completed. These heat treatment devices, which have a low treatment efficiency, are therefore not preferable as a heat treatment device used in the manufacturing process of mass production components such as bearing rings of rolling bearings.

In order to solve the above problem, the present applicant has proposed a new heat treatment device and a new heat treatment method in the specification of Japanese Patent Application No. 2017-174547. In the heat treatment device and the heat treatment method, heating and cooling are performed in a state where a first space having an inlet side opening for a workpiece that can be opened and closed and executing a heating step, and a second space connected to the first space and closing an outlet side opening for the workpiece with a liquid surface of the cooling liquid that immerses the workpiece are set to a sealed space, and the sealed space has a non-oxidizing atmosphere.

### CITATIONS LIST

### PATENT LITERATURE

Patent Literature 1: JP 2001-59116 A
Patent Literature 2: JP 2002-105532 A

### SUMMARY OF INVENTION

### TECHNICAL PROBLEMS

By the way, as proposed in the specification of Japanese Patent Application No. 2017-174547, in order to perform the heating treatment and the cooling treatment on the workpiece in the non-oxidizing atmosphere, the atmosphere in the sealed space needs to be replaced with the non-oxidizing atmosphere to prepare an environment where the workpiece can be carried in before the workpiece is carried in the sealed space. In this case, the atmosphere is preferably replaced with the non-oxidizing atmosphere in a short time. For example, a method of sending a large amount of non-oxidizing gas into the sealed space is considered. Alternatively, a method of rapidly exhausting the sealed space is considered.

However, when such a large amount of non-oxidizing gas is supplied to the sealed space, an air pressure in the sealed space rises. Consequently, for example, as proposed in the specification of Japanese Patent Application No. 2017-174547, when an outlet of the sealed space (outlet side opening for the workpiece) is structured to be closed by the liquid surface of the cooling liquid, the liquid surface of the cooling liquid is more likely to be pushed down. On the other hand, when the sealed space is rapidly exhausted, the atmosphere in the sealed space is decompressed. As a result, in the case where the outlet of the sealed space is structured to be closed with the liquid surface of the cooling liquid as described above, the cooling liquid is more likely to be drawn into the sealed space through the outlet side opening. In this way, an unstable liquid level of the cooling liquid may adversely affect a cooling control of the workpiece. In order to avoid this, for example, a gas having an air pressure slightly higher than an atmospheric pressure needs to be supplied to the sealed space, or to slowly exhaust the sealed space such that the pressure in the sealed space is slightly lower than the atmospheric pressure. In either method, it takes a significantly long time to replace the atmosphere with a non-oxidizing atmosphere, resulting in a decrease in productivity.

In view of the above circumstances, it is a technical problem to be solved herein to improve productivity of a heat treatment by replacing an atmosphere in a sealed space for a heating treatment and a cooling treatment with the non-oxidizing atmosphere in a short time while suppressing a fluctuation of a liquid level of a cooling liquid.

### SOLUTIONS TO PROBLEMS

The above problem can be solved by a workpiece heat treatment method of the present invention. That is, this heat treatment method includes a heating step of heating a workpiece, and a cooling step of cooling the workpiece that has been heated in the heating step by immersing the workpiece in a cooling liquid, and performing a predetermined heat treatment on the workpiece, in which an inlet side opening for the workpiece is provided in a first space in which the heating step is executed, and an outlet side opening for the workpiece is provided in a second space that is connected to the first space and is in contact with a liquid surface of the cooling liquid, the heating step and the cooling step are executed while the first space and the second space are both sealed by closing the inlet side opening and the outlet side opening with the liquid surface of the cooling liquid to set this sealed space to a non-oxidizing atmosphere, the method further includes a preparation step of making an atmosphere of the sealed space into a non-oxidizing atmosphere before the heating step to be in a state where the workpiece can be carried into the sealed space, and a non-oxidizing gas is supplied to the sealed space and the sealed space is exhausted simultaneously, and the supply of the non-oxidizing gas and the exhaust of the sealed space are controlled in accordance with an air pressure in the sealed space in the preparation step. Note that the term "non-oxidizing atmosphere" used herein refers to a concept including not only an atmosphere in which oxygen is not present at all, but also an atmosphere in which oxygen is slightly present such that no oxidized scale is generated on a surface of the workpiece (for example, an oxygen concentration of 100 ppm or lower). Similarly, the term "non-oxidizing gas" used herein refers to a concept including not only a gas containing no oxygen but also a gas containing a small amount of oxygen such that oxidized scale is not generated on the surface of the workpiece (for example, an oxygen concentration of 100 ppm or lower). The same applies to a heat treatment device of the present invention to be described later.

In this way, in the heat treatment method of the present invention, the non-oxidizing gas is supplied to the sealed space and the sealed space is exhausted simultaneously in the preparation step in which the atmosphere in the sealed space is made into a non-oxidizing atmosphere before the heating step to be in a state where the workpiece can be carried into the sealed space. This can increase a speed of the replacement with the non-oxidizing atmosphere, for example, as compared with a case where only the non-oxidizing gas is supplied or a case where only the sealed space is exhausted. This allows the heat treatment device to start operating quickly, and the productivity to be improved. Further, in the heat treatment method of the present invention, the supply of the non-oxidizing gas and the exhaust of the sealed space are controlled in accordance with the air pressure in the sealed space, and thus the air pressure in the sealed space can be maintained within a preset range even when a supply amount or an exhaust amount is increased. It is therefore possible to quickly replace the atmosphere in the sealed space with the non-oxidizing atmosphere while stabilizing a liquid level of the cooling liquid.

According to the heat treatment method of the present invention, of course, the workpiece that has been subjected to a heating treatment in the sealed space is cooled in the cooling liquid adjacent to the sealed space, and is subjected to the predetermined heat treatment. Thus, when one workpiece is cooled after completing the heating step (when immersed in the cooling liquid), the following workpiece can be subjected to the heating treatment in the sealed space, or the workpiece after the heating treatment can be carried to the second space that is in contact with the liquid surface of the cooling liquid for standby. Thus, the heating treatment and the cooling treatment for a plurality of the workpieces can be simultaneously performed in the non-oxidizing atmosphere. The heat treatment can be therefore efficiently performed on the plurality of workpieces without generating an oxidized scale on the surface of the workpieces, thus this makes it possible to cope with a manufacture of mass production components.

Further, in the workpiece heat treatment method of the present invention, the air pressure in the sealed space is measured, and when the measured air pressure is equal to or higher than an air pressure upper threshold value, the supply of the non-oxidizing gas to the sealed space may be controlled to be stopped, and the exhaust of the sealed space may be controlled to be continued.

In this way, when the measured air pressure in the sealed space is higher than the atmospheric pressure by a predetermined value or more (equal to or higher than the air pressure upper threshold value), the supply of the non-oxidizing gas is stopped. This can suppress a rise in the air pressure in the sealed space due to an inflow of the non-oxidizing gas. Meanwhile, by continuing the exhaust of the sealed space, the oxygen concentration and the air pressure can be reduced. It is therefore possible to make the sealed space closer to an atmosphere (non-oxidizing atmosphere) having the target oxygen concentration while the air pressure returns to fall within a predetermined range.

Alternatively, in the workpiece heat treatment method of the present invention, the pressure in the sealed space is measured, and when the measured air pressure is equal to or lower than the air pressure lower threshold value, the supply of the non-oxidizing gas to the sealed space may be controlled to be continued, and the exhaust of the sealed space may be controlled to be stopped.

In this way, when the measured air pressure in the sealed space is almost the same as or equal to or lower than the atmospheric pressure (equal to or lower than the air pressure lower threshold value), the exhaust of the sealed space is stopped, and thus a reduction in the air pressure due to the exhaust can be suppressed. Meanwhile, by continuing the supply of the non-oxidizing gas to the sealed space, the oxygen concentration can be reduced and the air pressure can be raised. It is therefore possible to make the sealed space closer to an atmosphere (non-oxidizing atmosphere) having the target oxygen concentration while the air pressure returns to fall within an allowable range.

Alternatively, in the workpiece heat treatment method of the present invention, the air pressure in the sealed space is measured, and when the measured air pressure is higher than the air pressure lower threshold value and lower than the air pressure upper threshold value, the oxygen concentration in the sealed space is measured, and when the measured oxygen concentration is equal to higher than an oxygen concentration threshold value, the supply of the non-oxidizing gas to the sealed space may be controlled to be continued and the exhaust of the sealed space may be controlled to be continued.

In this way, when the measured air pressure in the sealed space is within the allowable range, by continuing the supply of the non-oxidizing gas and the exhaust of the sealed space, the oxygen concentration in the sealed space can be effectively reduced while the air pressure is continuously kept stable. When the oxygen concentration in the sealed space is effectively reduced with the air pressure kept stable, the oxygen concentration is measured, and whether the measured oxygen concentration has reached a target value or lower is determined. When it is determined that the air pressure has not yet reached the target value or lower, the supply and the exhaust are continued while performing the above air pressure control. This allows the atmosphere in the sealed space to be reliably replaced with the non-oxidizing atmosphere.

Alternatively, in the workpiece heat treatment method of the present invention, the air pressure in the sealed space is measured, and when the measured air pressure is higher than the air pressure lower threshold value and lower than the air pressure upper threshold value, the oxygen concentration in the sealed space is measured, and when the measured oxygen concentration is lower than the oxygen concentration threshold value, the supply of the non-oxidizing gas to the sealed space may be controlled to be stopped and the exhaust of the sealed space may be controlled to be stopped.

When the oxygen concentration in the sealed space reaches the target range in this way, no more supply and exhaust is needed, and thus the supply of the non-oxidizing gas is stopped and the exhaust of the sealed space is stopped. This allows the atmosphere in the sealed space to be maintained in a state where being replaced with the non-oxidizing atmosphere.

In the workpiece heat treatment method of the present invention, the air pressure in the sealed space is measured at regular intervals, and when the measured air pressure is higher than the air pressure lower threshold value and lower than the air pressure upper threshold value, the oxygen concentration in the sealed space is measured, and the supply of the non-oxidizing gas to the sealed space and the exhaust of the sealed space may be repeatedly controlled in accordance to the measured air pressure until the measured oxygen concentration is lower than the oxygen concentration threshold value.

In this way, the air pressure and the oxygen concentration are measured at regular intervals, and the supply and exhaust control in accordance with the measured air pressure is repeated until each value falls within the predetermined range. This can quickly reduce the oxygen concentration while the pressure in the sealed space is accurately controlled.

Further, in the workpiece heat treatment method of the present invention, the workpiece is carried into a replacement chamber adjacent to the first space through the inlet side opening while the inlet side opening is closed, and the atmosphere in the sealed space is made into the non-oxidizing atmosphere, an atmosphere in the replacement chamber is replaced from an air atmosphere to the non-oxidizing atmosphere, and subsequently, the inlet side opening is opened, and the workpiece may be carried into the sealed space.

The workpiece is carried into the replacement chamber adjacent to the first space while the inlet side opening is closed, and the atmosphere in the sealed space is made into the non-oxidizing atmosphere, the atmosphere in the replacement chamber is replaced with the non-oxidizing atmosphere, and subsequently, the workpiece is carried into the sealed space. Thus, the oxidizing gas is prevented from flowing into the sealed space from the replacement chamber when the inlet side opening of the first space is opened. This allows the workpiece to be carried into the sealed space while keeping the atmosphere in the sealed space as the non-oxidizing atmosphere.

In the workpiece heat treatment method of the present invention, the workpiece may be inductively heated to a target temperature in the heating step, and the workpiece that has been heated may be cooled and quenched in the cooling step.

In this way, by heating the workpiece to the target temperature by induction heating, only the workpiece can be directly heated, achieving high energy efficiency, and an entire heat treatment facility including the sealed space can be made compact. As the sealed space becomes compact, a replacement volume becomes small, and a rapid replacement with the non-oxidizing atmosphere can be achieved relatively easily.

Further, the above-described workpiece heat treatment method is capable of improving the productivity of the workpiece by shortening the time required for operating the heat treatment device. The method is suitable as a method of performing the heat treatment on mass production components such as bearing rings of rolling bearings.

Further, the above problem can be also solved by a workpiece heat treatment device of the present invention. That is, this heat treatment device includes a heating part that heats a workpiece, and a cooling part that cools the workpiece that has been heated by the heating part by immersing the workpiece in a cooling liquid, and performing a predetermined heat treatment on the workpiece, in which the heating part has a first space in which the workpiece is heated, and the cooling part has a second space that is connected to the first space and is in contact with a liquid surface of the cooling liquid, the first space is provided with an inlet side opening for the workpiece, and the second space is provided with an outlet side opening for the workpiece, and the first space and the second space are both sealed by closing the inlet side opening and closing the outlet side opening with the liquid surface of the cooling liquid, and this sealed space is made into a non-oxidizing atmosphere, the workpiece heat treatment device further includes an air pressure measuring device that measures an air pressure in the sealed space, an air supply device that supplies a non-oxidizing gas to the sealed space, an exhaust device that exhausts the sealed space, and a control unit that supplies the non-oxidizing gas to the sealed space by the air supply device and exhausts the sealed space by the exhaust device simultaneously, and controls the supply and exhaust in accordance with the air pressure measured by the air pressure measuring device.

The heat treatment device having the above configuration can improve the speed of the replacement with the non-oxidizing atmosphere, similarly to the heat treatment method of the present invention described above. This allows the heat treatment device to start operating quickly, and the productivity to be improved. Further, the supply of the non-oxidizing gas and the exhaust of the sealed space can be controlled in accordance with the air pressure in the sealed space, and thus the air pressure in the sealed space can be maintained within a preset range even when the supply amount or the exhaust amount is increased. It is therefore possible to quickly replace the atmosphere in the sealed space with the non-oxidizing atmosphere while stabilizing a liquid level of the cooling liquid.

### ADVANTAGEOUS EFFECTS OF INVENTION

As described above, according to the workpiece heat treatment method and the workpiece heat treatment device according to the present invention, the atmosphere in the sealed space for the heating treatment and the cooling treatment can be replaced with the non-oxidizing atmosphere in a short time while suppressing the fluctuation of the liquid level of the cooling liquid. This can reduce the time required for operating the heat treatment device and improve the productivity of the workpiece related to the heat treatment.

### BRIEF DESCRIPTION OF DRAWINGS

FIG. 1 is a perspective view of a heat treatment device according to one embodiment of the present invention.
FIG. 2 is a front view of the heat treatment device shown in FIG. 1.
FIG. 3 is a cross-sectional view of a heating part.
FIG. 4 is a perspective view of a heating device.
FIG. 5 is a cross-sectional view of a cooling part.
FIG. 6 is a block diagram illustrating a configuration of a supply and exhaust control system of the heat treatment device.
FIG. 7A is a flowchart illustrating an overall flow of a heat treatment method according to one embodiment of the present invention.
FIG. 7B is a flowchart illustrating a flow of a preparation step in the heat treatment method according to one embodiment of the present invention.
FIG. 8 is a flowchart illustrating an example of the supply and exhaust control in the preparation step.
FIG. 9 is a flowchart illustrating an example of the supply and exhaust control in a heating step and a cooling step.
FIG. 10 is a cross-sectional view of a main part of the cooling part, illustrating a state where the cooling step is executed.
FIG. 11 is a cross-sectional view of the main part of the cooling part, illustrating a state where a cooling step according to another embodiment of the present invention is executed.
FIG. 12A is a cross-sectional view of the main part of the cooling part, illustrating a state where the cooling step is executed when a constraining die according to another embodiment of the present invention is used.
FIG. 12B is a cross-sectional view of the main part of the cooling part, illustrating a state where the cooling step is executed when a constraining die according to another embodiment of the present invention is used.
FIG. 13 is a cross-sectional view of a main part of a cooling part according to another embodiment of the present invention.
FIG. 14 is a perspective view of a heating device according to another embodiment of the present invention.
FIG. 15 is a cross-sectional view of a heating part having the heating device shown in FIG. 14.

### DESCRIPTION OF EMBODIMENTS

Hereinafter, one embodiment of the present invention will be described with reference to the drawings.

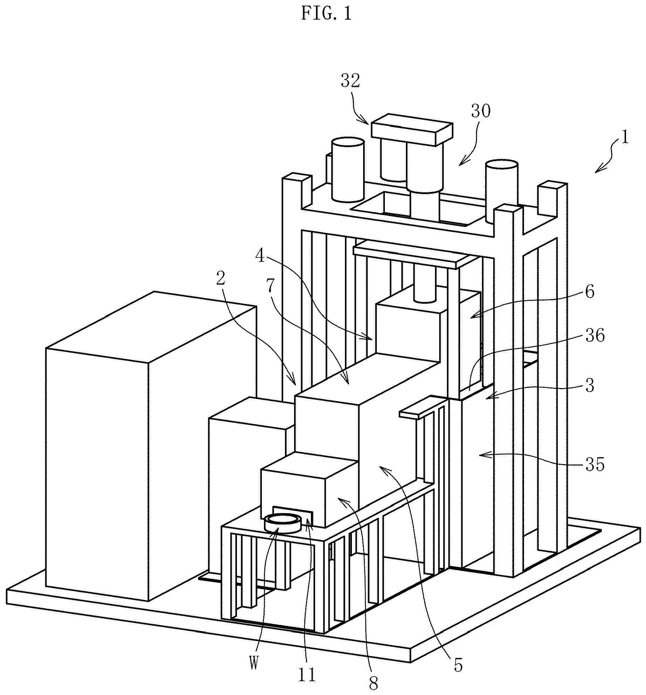

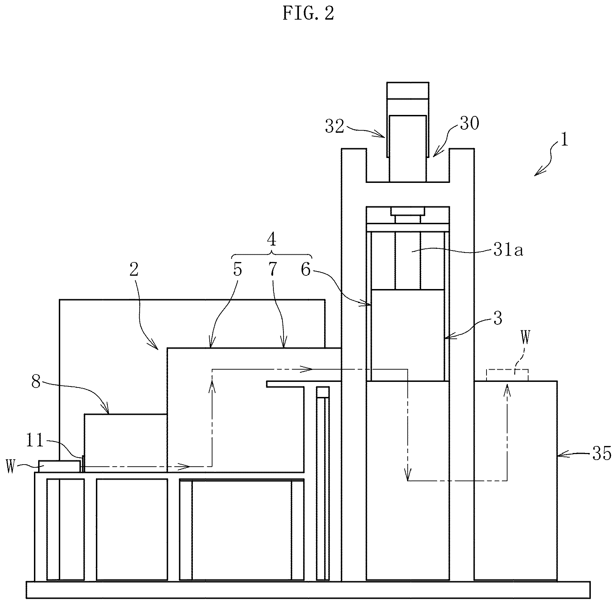

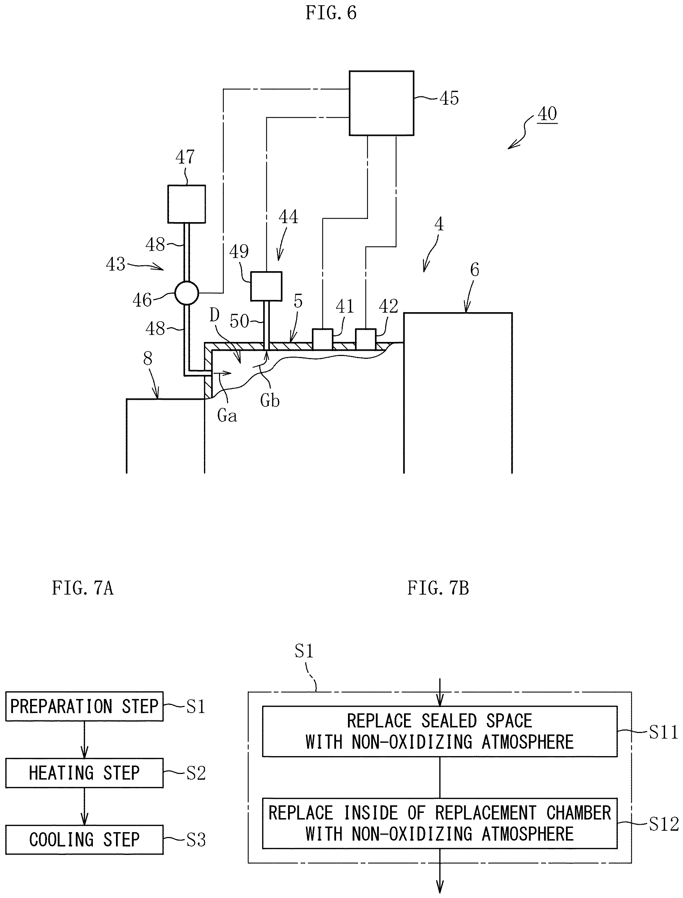

FIG. 1 is a perspective view showing an entire structure of a heat treatment device according to one embodiment of the present invention, and FIG. 2 is a front view of the heat treatment device. The heat treatment device 1 shown in FIGS. 1 and 2 is a so-called continuous heat treatment device 1 configured to perform a quenching and hardening treatment on an annular workpiece W (in this embodiment, a base material of an outer ring of a rolling bearing) including a steel material such as SUJ2 while feeding the workpiece W along a path shown by a two-dot chain line in FIG. 2. The heat treatment device 1 includes a heating part 2 executing a heating step S2 (see FIG. 7A described later) that inductively heats the workpiece W to a target temperature (quenching temperature) along a feed direction of the workpiece W, and a cooling part 3 executing a cooling step S3 (see FIG. 7A to be described later) that cools and quenches the workpiece W heated by the heating part 2. Further, the heat treatment device 1 is configured such that the heating step S2 and the cooling step S3 can be executed in a non-oxidizing atmosphere. As described later, the heat treatment device 1 further includes a supply and exhaust control system 40 for a sealed space D as an internal space of a sealed chamber 4. Hereinafter, first, a configuration of the heat treatment device 1 will be described. Then, an example of a heat treatment method using the heat treatment device 1 will be described.

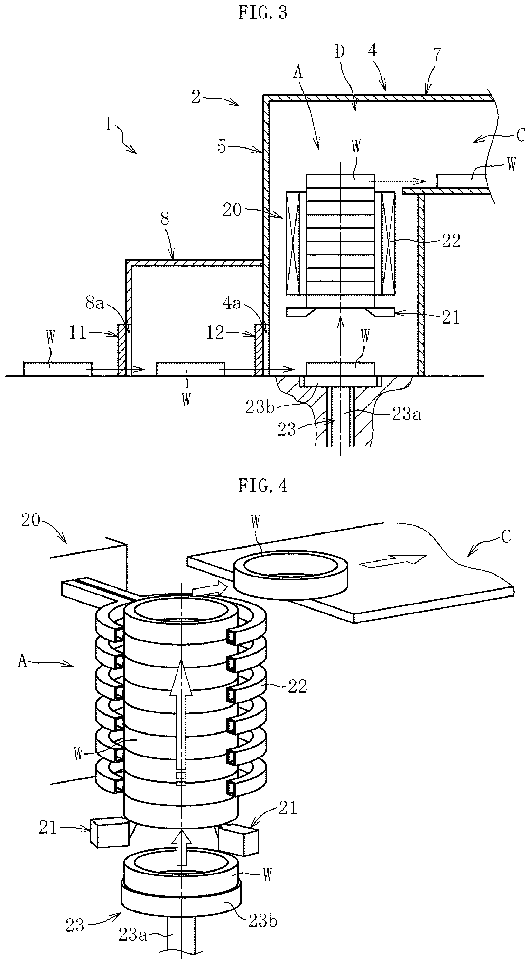

As shown in FIG. 3, the heating part 2 includes a heating device 20, a heating chamber 5, a replacement chamber 8, and a passage chamber 7.

The heating device 20 is a device that inductively heats the workpiece W to the target temperature. In this embodiment, as shown in FIGS. 3 and 4, the heating device 20 includes support members 21 capable of supporting a plurality of workpieces W in a stacked state, a heating coil 22 disposed radially outside of the workpiece W supported by the support members 21, and a workpiece supply means 23 disposed below the support members 21 and supplying the workpiece W (a following workpiece W carried from upstream of a path) to the support members 21.

The support members 21 are provided at a plurality of locations (for example, three locations) spaced apart in a circumferential direction of the workpiece W to be supported. Each of the support members 21 is provided so as to be able to advance and retreat along the radial direction of the workpiece W to be supported, moves radially outward of the workpiece W to be supported while the workpiece W is supplied from below by the workpiece supply means 23, and receives the workpiece. After receiving the workpiece W, each support member 21 moves radially inward of the workpiece W to be supported and supports the workpiece W from below.

The heating coil 22 includes, for example, a so-called multi-turn coil formed by spirally winding a tubular body made of a conductive metal such as a copper tube, and is disposed coaxially with the workpiece W supported by the support members 21. As the heating coil 22, a coil having a total length (axial direction) of several times to several tens of times an axial dimension of the workpiece W is used. By using the heating coil 22 having such a total length, the plurality of workpieces W supported in a stacked state by the support members 21 are sequentially heated inductively to a target temperature while being sent upward through an inner region of the heating coil 22 in an energized state.

The workpiece supply means 23 is configured by, for example, a power cylinder (a hydraulic cylinder, an air cylinder, or an electric cylinder) having a telescopic cylinder rod 23a disposed coaxially with the workpiece W supported by the support members 21. A flange part 23b on which the workpiece W can be placed is provided at a tip of the cylinder rod 23a.

The heating device 20 having the above configuration is disposed in an internal space of the heating chamber 5 as a first space A of the present invention. The replacement chamber 8 is disposed upstream of the heating chamber 5 (rearward in the feed direction of the workpiece W) adjacent to the heating chamber 5, and the passage chamber 7 is disposed downstream of the heating chamber 5 (forward in the feed direction of the workpiece W) adjacent to the heating chamber 5.

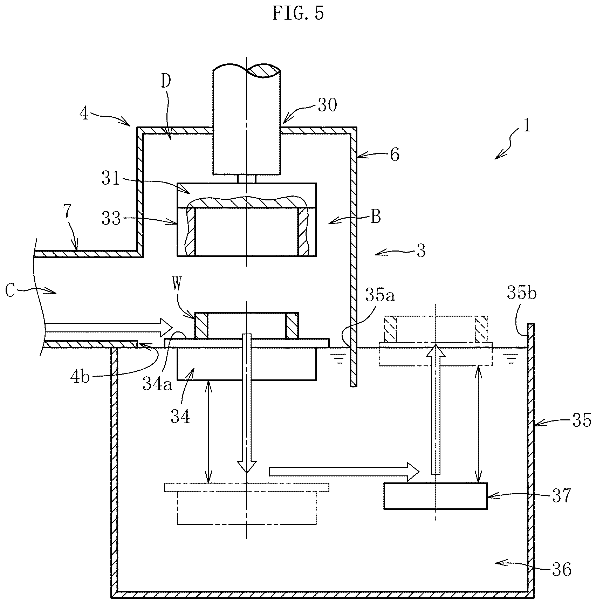

Here, as shown in FIG. 2, the heating chamber 5 cooperates with the passage chamber 7 and a quenching preparation chamber 6 to be described later to form the sealed chamber 4 in which an indoor atmosphere (indoor atmosphere during an operation of the heat treatment device 1) is kept as the non-oxidizing atmosphere. The sealed chamber 4 includes the heating chamber 5, the passage chamber 7, and the quenching preparation chamber 6 that are arranged in that order along the feed direction of the workpiece W. As shown in FIGS. 3 and 5, the internal space of the chamber 5 as the first space A and an internal space of the quenching preparation chamber 6 as a second space B of the present invention are connected to each other via an internal space of the passage chamber 7 (passage C) provided between the two chambers 5 and 6. Thus, in this embodiment, the sealed chamber 4 has the first space A and the second space B provided separately from each other, and the passage C, and configures a sealed space D of the present invention with the first space A, the second space B, and the passage C. The sealed chamber 4 further includes an inlet side opening 4a (see FIG. 3) from which the workpiece W is put into the internal space of the heating chamber 5, and an outlet side opening 4b (see FIG. 5) provided on a bottom wall of the quenching preparation chamber 6. The inlet side opening 4a is opened and closed by an opening and closing means (second opening and closing means 12) shown in FIG. 3. The outlet side opening 4b always keeps closed by a liquid surface of a cooling liquid 36 stored in a cooling liquid storage tank 35 as shown in FIG. 5. The supply and exhaust control system 40 for the internal space of the sealed chamber 4 (sealed space D) will be described later.

The replacement chamber 8 is provided in order to keep the indoor atmosphere of the sealed chamber 4 including the heating chamber 5 (atmosphere of the sealed space D) the non-oxidizing atmosphere when the workpiece W is put into the internal space of the heating chamber 5. Although not shown, in order to make the atmosphere in the replacement chamber 8 replaceable to the non-oxidizing atmosphere, the replacement chamber 8 is therefore provided with an air supply device that supplies the non-oxidizing gas to the replacement chamber 8, an exhaust device that exhausts inside of the replacement chamber 8, an air supply pipe that connects the air supply device to the inside of the replacement chamber 8, and an exhaust pipe that connects the exhaust device and the inside of the replacement chamber 8.

As shown in FIG. 3, the replacement chamber 8 is provided with an opening 8a from which the workpiece W is put into an internal space of the replacement chamber 8. The opening 8a can be opened and closed by the opening and closing means (first opening and closing means 11). Any opening and closing device can be employed as the first opening and closing means 11, and for example, a vertically movable shutter can be employed.

An opening and closing means (second opening and closing means 12) is provided between the replacement chamber 8 and the heating chamber 5. The inlet side opening 4a of the sealed chamber 4 (sealed space D) can be opened and closed by the second opening and closing means 12. The second opening and closing means 12 closes the inlet side opening 4a of the sealed chamber 4 (heating chamber 5) when the opening 8a is switched from a closed state to an open state by the first opening and closing means 11. Note that any opening and closing device can be employed as the second opening and closing means 12, and for example, a vertically movable shutter can be employed.

Although not shown, the heating part 2 has a transfer means that transfers the workpiece W put into the internal space of the replacement chamber 8 to the internal space of the heating chamber 5. As the transfer means, for example, a transfer conveyor disposed so as to straddle bottoms of the replacement chamber 8 and the heating chamber 5, or a power cylinder (a hydraulic cylinder, an air cylinder, or an electric cylinder) can be employed.

The internal space of the passage chamber 7 is heated to the target temperature by the heating device 20, and utilized as the passage C for transferring the workpiece W that has completed to be heated and discharged to the outside of the heating device 20 (above the heating coil 22) to the internal space of the quenching preparation chamber 6 as the second space B. The passage chamber 7 is provided with a transfer means such as a transfer conveyor (not shown), and the transfer means enables the workpiece W discharged to the outside of the heating device 20 to be transferred from the first space A to the second space B.

The cooling part 3 is an area where a cooling step of cooling and quenching the workpiece W heated to the target temperature by the heating part 2 is executed, as described above. The cooling part 3 according to this embodiment is configured such that the workpiece W can be cooled (quenched) while an outer peripheral surface of the workpiece W is constrained by the constraining die 33. As shown in FIGS. 1, 2, and 5, the cooling part 3 includes the quenching preparation chamber 6 disposed adjacent to a downstream side of the heating chamber 5 through the passage chamber 7, a press device 30, the constraining die 33, a lifting table 34, and the cooling liquid storage tank 35.

The press device 30 includes a pressurizing member 31 that pressurizes downward the workpiece W transferred to the internal space of the quenching preparation chamber 6 (the second space B) through the internal space of the passage chamber 7 (the passage C) and immerses the workpiece W in the cooling liquid 36 stored in the cooling liquid storage tank 35, and a lifting unit 32 that liftably holds the pressurizing member 31. In this embodiment, the constraining die 33 is attached and fixed to a lower end of the pressurizing member 31, and the constraining die 33 can ascend and descend integrally with the pressurizing member 31. As shown in FIGS. 1 and 2, the lifting unit 32 is disposed outside of the quenching preparation chamber 6. As shown in FIG. 5, the pressurizing member 31, the constraining die 33 attached and fixed to the pressurizing member 31, and at a lower end only a part of a shaft member holding the pressurizing member 31 are disposed in the second space B. The shaft member holding the pressurizing member 31 is inserted into a through hole penetrating a ceiling wall of the quenching preparation chamber 6, and this through hole (a gap between an inner wall surface of the through hole and an outer surface of the shaft member) is sealed with a sealing material (not shown).

As shown in FIG. 5, the cooling liquid storage tank 35 is provided below the quenching preparation chamber 6, and stores the cooling liquid 36 that cools and quenches the workpiece W. As the cooling liquid 36, a known quenching oil, a water-soluble quenching liquid, or the like can be used. In this embodiment, an upper part of the cooling liquid storage tank 35 is open, and this opening is divided into a first opening 35a and a second opening 35b by a wall of the sealed chamber 4 (quenching preparation chamber 6). The outlet side opening 4b of the sealed chamber 4 (sealed space D) provided in the quenching preparation chamber 6 is closed by the liquid surface of the cooling liquid 36 that is present inside of the first opening 35a, the cooling liquid 36 being stored in the cooling liquid storage tank 35.

As shown in FIG. 5, the lifting table 34 is disposed immediately below the pressurizing member 31, and ascends and descends in the cooling liquid 36. An upper end surface 34a of the lifting table 34 is a loading surface on which the workpiece W is placed. When the lifting table 34 is located at an ascending limit, the upper end surface 34a of the lifting table 34 is located above the liquid surface of the cooling liquid 36 stored in the cooling liquid storage tank 35, and receives the workpiece W transferred through the internal space of the passage chamber 7.

A delivery means (not shown) that delivers the quenched workpiece W released from the constraining die 33 from the lifting table 34, and a discharge means 37 that receives the delivered workpiece W and discharges the workpiece W to the outside of the cooling liquid storage tank 35 (heat treatment device 1) are provided inside the cooling liquid storage tank 35 (in the cooling liquid 36). As the discharge means 37, for example, a lifting table provided separately from the lifting table 34 can be employed. This lifting table for discharging the workpiece is provided to be able to ascend and descend at a position directly below the second opening 35b of the cooling liquid storage tank 35, and discharges the quenched workpiece W from the second opening 35b to the outside of the cooling liquid storage tank 35, that is, to the outside of the heat treatment device 1.

Next, the supply and exhaust control system 40 for the internal space (sealed space D) of the sealed chamber 4 will be described.

As shown in FIG. 6, the supply and exhaust control system 40 includes an oxygen concentration measuring device 41 that measures the oxygen concentration in the sealed space D as the internal space of the sealed chamber 4, an air pressure measuring device 42 that measures the air pressure in the sealed space D, an air supply device 43 that supplies a non-oxidizing gas Ga to the sealed space D, an exhaust device 44 that exhausts the sealed space D, and a control unit 45 that controls driving of the air supply device 43 and the exhaust device 44.

The oxygen concentration measuring device 41 is, for example, an oxygen concentration meter, and is attached to the sealed chamber 4 so as to measure the oxygen concentration in the sealed space D. The air pressure measuring device 42 is, for example, a pressure sensor, and is attached to the sealed chamber 4 so as to measure the air pressure in the sealed space D.

In this embodiment, the air supply device 43 has an air supply valve 46 and a reserve tank 47 storing the non-oxidizing gas Ga. The sealed space D and the air supply valve 46 are connected by an air supply pipe 48, and the air supply valve 46 and the reserve tank 47 are connected by the air supply pipe 48. In this embodiment, the exhaust device 44 has an exhaust pump 49, and the sealed space D and the exhaust pump 49 are connected by an exhaust pipe 50. With the configuration described above, the non-oxidizing gas Ga discharged from the reserve tank 47 reaches the air supply valve 46 through the air supply pipe 48, and passes through the air supply valve 46 while the air supply valve 46 is open, and is supplied to the sealed space D through the air supply pipe 48 downstream of the air supply valve 46. In this embodiment, the non-oxidizing gas Ga having an air pressure higher than the atmospheric pressure (for example, atmospheric pressure +0.01 MPa or higher) is stored in the reserve tank 47. The non-oxidizing gas Ga automatically flows into the sealed space D having a relatively low pressure when the air supply valve 46 is opened. Further, when the exhaust pump 49 is driven, the gas Gb filling the sealed space D is discharged to the outside of the heat treatment device 1 through the exhaust pipe 50 (and further, through the inside of the exhaust pump 49). As the non-oxidizing gas, any kind of gas can be used. For example, an inert gas such as a nitrogen gas, a helium gas, an argon gas, or a reducing gas such as a hydrogen gas, a carbon monoxide gas, a nitrogen dioxide gas, a hydrogen sulfide gas, or sulfur dioxide gas can be used.

The oxygen concentration measuring device 41, the air pressure measuring device 42, the air supply device 43 (air supply valve 46), and the exhaust device 44 (exhaust pump 49) are all electrically connected to the control unit 45, as shown by a dashed line in FIG. 6. Consequently, a measured value of the oxygen concentration measured by the oxygen concentration measuring device 41 is sent to the control unit 45, and a measured value of the air pressure measured by the air pressure measuring device 42 is sent to the control unit 45. Further, when a command from the control unit 45 is sent to the air supply valve 46 and the exhaust pump 49, the driving of the air supply valve 46 and the exhaust pump 49 can be controlled in response to the command.

The control unit 45 stores a predetermined control program in advance. In this embodiment, two control programs are mainly stored. Among the two, a first control program is a program executed in a preparation step S1 (see FIG. 7A) before the heating step S2, and the second control program is a program executed in the heating step S2 and the cooling step S3 after the preparation step S1.

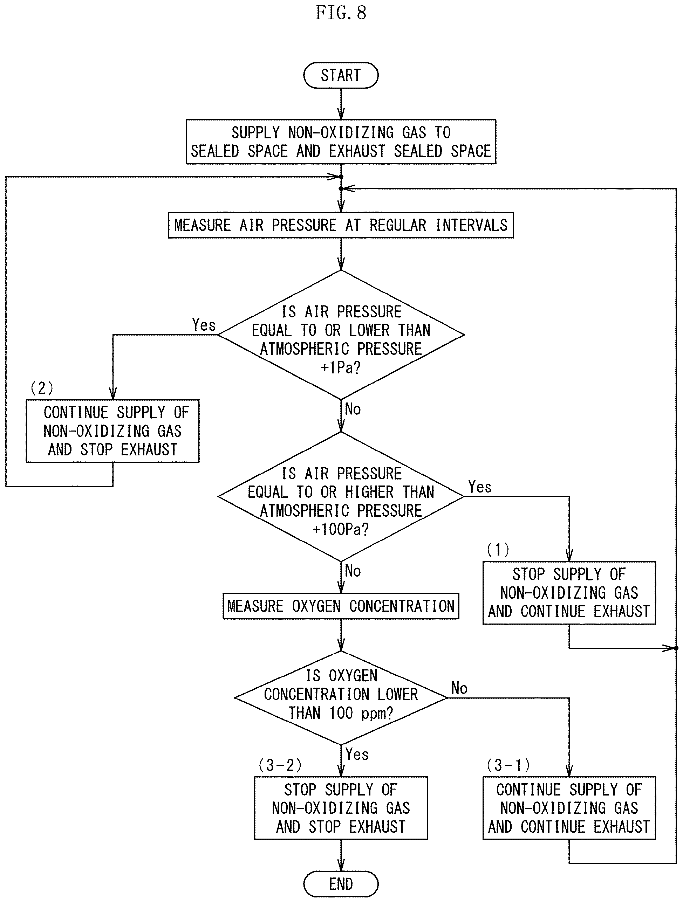

Specifically describing each control program, the first control program is set so as to supply the non-oxidizing gas Ga to the sealed space D and exhaust the sealed space D simultaneously, and control the supply and exhaust in accordance with the air pressure in the sealed space D in the preparation step S1 (see FIG. 7A) to be described later. In this embodiment, as shown in FIG. 8, the air pressure in the sealed space D is measured at regular intervals, and the supply and exhaust are controlled in three patterns in accordance with measured values of the pressure. In other words, (1) when the measured air pressure is equal to or higher than an air pressure upper threshold value (atmospheric pressure +100 Pa in this embodiment), the air supply device 43 and the exhaust device 44 are controlled so as to stop supplying the non-oxidizing gas Ga to the sealed space D and continue to exhaust the sealed space D. Alternatively, (2) when the measured air pressure is equal to or lower than an air pressure lower threshold value (atmospheric pressure +1 Pa in this embodiment), the air supply device 43 and the exhaust device 44 are controlled so as to continue to supply the non-oxidizing gas Ga to the sealed space D and stop exhausting the sealed space D. Alternatively, (3) when the measured air pressure is higher than the air pressure lower threshold value (atmospheric pressure +1 Pa) and lower than the air pressure upper threshold value (atmospheric pressure +100 Pa), the oxygen concentration in the sealed space is also measured. (3-1) When the measured oxygen concentration is equal to or higher than a preset oxygen concentration threshold value (for example, 100 ppm), the air supply device 43 and the exhaust device 44 are controlled so as to continue to supply the non-oxidizing gas Ga to the sealed space D, and continue to exhaust the sealed space D. Alternatively, (3-2) when the measured oxygen concentration is lower than the above threshold value (100 ppm), the air supply device 43 and the exhaust device 44 are controlled so as to stop supplying the non-oxidizing gas Ga to the sealed space D, and stop exhausting the sealed space D. In this embodiment, the air pressure upper threshold value and the air pressure lower threshold value are set to the atmospheric pressure +100 Pa and the atmospheric pressure +1 Pa, respectively. However, the present invention is not limited thereto, but may be appropriately changed in accordance with types of the workpiece W or the heat treatment or the like. The same applies to an air pressure upper threshold value and an air pressure lower threshold value in the second control program to be described later. Further, the threshold value of the oxygen concentration is set to 100 ppm in this embodiment. However, when the oxygen concentration in the sealed space D needs to be more strictly controlled in accordance with the type of the workpiece W or the heat treatment, the threshold value of the oxygen concentration may be set to 50 ppm, preferably to 20 ppm, and more preferably to 10 ppm or lower. The same applies to a threshold value of the oxygen concentration in the second control program to be described later.

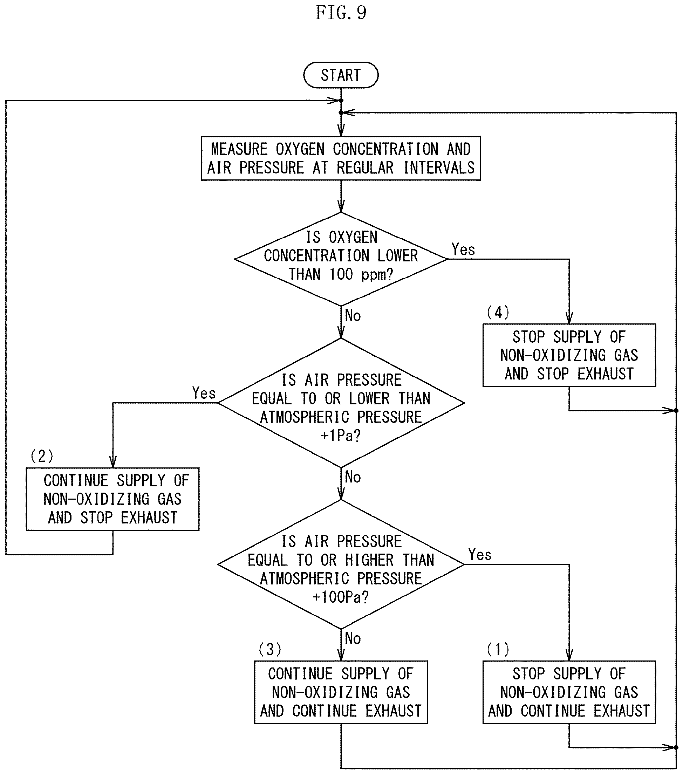

In the heating step S2 and the cooling step S3 (see FIG. 7A), the second control program is set so as to measure the oxygen concentration and the air pressure in the sealed space D at regular intervals, control the supply of the non-oxidizing gas Ga into the sealed space D and control the exhaust of the sealed space D on the basis of the measured values of the oxygen concentration and the air pressure. In this embodiment, as shown in FIG. 9, when the measured oxygen concentration is equal to or higher than the preset oxygen concentration threshold (100 ppm in this embodiment), the control is performed in the following three patterns in accordance with the value of the air pressure measured at the same time. That is, (1) when the measured air pressure is equal to or higher than the preset air pressure upper threshold value (atmospheric pressure +100 Pa in this embodiment), the air supply device 43 and the exhaust device 44 are controlled so as to stop supplying the non-oxidizing gas Ga to the sealed space D and continue to exhaust the sealed space D. Alternatively, (2) when the measured air pressure is equal to or lower than the preset air pressure lower threshold value (atmospheric pressure +1 Pa in this embodiment), the air supply device 43 and the exhaust device 44 are controlled so as to continue to supply the non-oxidizing gas Ga to the sealed space D and stop exhausting the sealed space D. (3) When the measured air pressure is higher than the air pressure lower threshold value (atmospheric pressure +1 Pa) and lower than the air pressure upper threshold value (atmospheric pressure +100 Pa), the air supply device 43 and the exhaust device 44 are controlled so as to continue to supply the non-oxidizing gas Ga to the sealed space D and continue to exhaust the sealed space D.

When the measured oxygen concentration is lower than the threshold value (100 ppm), the air supply device 43 and the exhaust device 44 are controlled so as to stop supplying the non-oxidizing gas Ga to the sealed space D and stop exhausting the sealed space D.

Next, an example of the heat treatment method for the workpiece W using the heat treatment device 1 having the above configuration will be described.

As shown in FIG. 7A, the heat treatment method for the workpiece W according to this embodiment includes the preparation step S1, the heating step S2, and the cooling step S3. Further, as shown in FIG. 7B, the preparation step S1 includes a first replacement step S11 that replaces the atmosphere in the sealed space D with the non-oxidizing atmosphere and a second replacing step S12 that replaces the atmosphere in the replacement chamber 8 with the non-oxidizing atmosphere. Hereinafter, details of each step will be sequentially described with reference to FIGS. 3, 5, and 6.

### (S1) Preparation step

### (S11) First replacement step

In this step, first, at a start of the operation of the heat treatment device 1 (before putting the workpiece W into the heat treatment device 1), the air atmosphere is replaced with a non-oxidizing atmosphere in the sealed chamber 4 including the heating chamber 5, the quenching preparation chamber 6, and the passage chamber 7 (sealed space D including the first space A, the second space B, and the passage C) (first replacement step S11). This atmosphere replacement treatment is performed by operating the air supply device 43 (the air supply valve 46 and the reserve tank 47) connected to the sealed space D to supply the non-oxidizing gas Ga to the sealed space D while closing the inlet side opening 4a and the outlet side opening 4b of the sealed chamber 4 (sealed space D), and operating the exhaust device 44 (exhaust pump 49) to exhaust the gas (normally at the start of the operation, atmosphere) Gb present in the sealed space D. The supply and exhaust by the air supply device 43 and the exhaust device 44 are performed on the basis of the first control program of the control unit 45. Hereinafter, an example of the control flow will be described mainly with reference to FIG. 8.

### [Example of supply and exhaust control in preparation step]

First, in response to a command from the control unit 45, the inlet side opening 4a and the outlet side opening 4b of the sealed chamber 4 (sealed space D) are closed, and the air supply device 43 and the exhaust device 44 are operated to supply the non-oxidizing gas Ga to the sealed space D and exhaust the sealed space D. In this embodiment, as shown in FIG. 6, opening the air supply valve 46 causes the non-oxidizing gas Ga stored in the reserve tank 47 to be supplied to the sealed space D through the air supply pipe 48. Further, driving the exhaust pump 49 causes the gas Gb present in the sealed space D to be discharged to the outside of the sealed space D (outside of the sealed chamber 4) through the exhaust pipe 50. This starts the treatment of reducing the oxygen concentration in the sealed space D.

Then, the air pressure in the sealed space D is automatically measured by the air pressure measuring device 42 at regular intervals (see FIG. 8). Here, (1) when the measured air pressure value is equal to or higher than the air pressure upper threshold value (atmospheric pressure +100 Pa), the control unit 45 sends a control command to the air supply device 43 and the exhaust device 44 to stop supplying the non-oxidizing gas Ga to the sealed space D and to continue to exhaust the sealed space D. In this embodiment, the command is sent to the air supply valve 46 and the exhaust pump 49 to close the air supply valve 46 and continue to drive the exhaust pump 49. This reduces the oxygen concentration in the sealed space D, and suppresses an air pressure rise or reduces the air pressure.

Alternatively, (2) when the measured air pressure is equal to or lower than the air pressure lower threshold value (atmospheric pressure +1 Pa), the control unit 45 sends a control command to the air supply device 43 and the exhaust device 44 to continue to supply the non-oxidizing gas Ga to the sealed space D and to stop exhausting the sealed space D. In this embodiment, the command is sent to the air supply valve 46 and the exhaust pump 49 to keep the air supply valve 46 open and stop driving the exhaust pump 49. This continuously reduces the oxygen concentration in the sealed space D, and suppresses an air pressure decrease or increases the air pressure.

Alternatively, when the measured air pressure is higher than the air pressure lower threshold value (atmospheric pressure +1 Pa) and lower than the air pressure upper threshold value (atmospheric pressure + 100 Pa), the control unit 45 sends a command to the oxygen concentration measuring device 41 to measure the oxygen concentration in the sealed space D. (3-1) When the measured oxygen concentration is equal to or higher than the preset oxygen concentration threshold value (for example, 100 ppm), a control command is sent to the air supply device 43 and the exhaust device 44 to continue to supply the non-oxidizing gas Ga to the sealed space D and continue to exhaust the sealed space D. In this embodiment, the command is sent to the air supply valve 46 and the exhaust pump 49 to keep the air supply valve 46 open and continue to drive the exhaust pump 49. This facilitates the reduction in the oxygen concentration in the sealed space D proceeding toward a target range (lower than 100 ppm) while the air pressure in the sealed space D is stable within a predetermined range.

Then, (3-2) when it is detected that the measured oxygen concentration has decreased to below the threshold value (100 ppm) while the air pressure is kept within the above range, that is, when it is detected that the oxygen concentration has reached the target range, the control unit 45 sends a control command to the air supply device 43 and the exhaust device 44 to stop supplying the non-oxidizing gas Ga to the sealed space D and stop exhausting the sealed space D. In this embodiment, the air supply valve 46 is closed, and the driving of the exhaust pump 49 is stopped. Thus, the air pressure in the sealed space D is within a predetermined range (in this embodiment, higher than the atmospheric pressure +1 Pa, and lower than the atmospheric pressure +100 Pa), and the oxygen concentration is lower than 100 ppm, that is, in a state of the non-oxidizing atmosphere.

### (S12) Second replacement step

As described above, after the atmosphere in the sealed space D is replaced with the non-oxidizing atmosphere, the workpiece W is carried into the replacement chamber 8 (see FIG. 3) adjacent to the heating chamber 5 (first space A) while the inlet side opening 4a is closed, and the atmosphere in the replacement chamber 8 is replaced from the air atmosphere to the non-oxidizing atmosphere while the opening 8a of the replacement chamber 8 is closed (second replacement step S12). After that, the inlet side opening 4a is opened, and the workpiece W is carried into the sealed space D. After the workpiece W is carried in, the second opening and closing means 12 is in a closed state, and the inlet side opening 4a of the sealed space D is closed. Thus, the workpiece W can be carried into the sealed space D while the sealed space D is kept in the non-oxidizing atmosphere. In this embodiment, after replacing the atmosphere in the sealed space D with the non-oxidizing atmosphere, the workpiece W is carried into the replacement chamber 8, and the atmosphere in the replacement chamber 8 is replaced with the non-oxidizing atmosphere. However, of course, the present invention is not limited thereto. For example, after the workpiece W is carried into the replacement chamber 8 with the inlet side opening 4a closed in advance, and the first replacement step S11 and the second replacing step S12 may be executed, the inlet side opening 4a may be opened, and the workpiece W may be carried into the sealed space D. Further, the order of the first replacement step S11 and the second replacement step S12 is not particularly limited. For example, after the second replacement step S12 is executed in a state where the workpiece W has been carried into the replacement chamber 8, the first replacement step S11 may be executed.

### (S2) Heating step

As described above, after the workpiece W is carried into the sealed space D in the non-oxidizing atmosphere, the workpiece W is subjected to the heating treatment. Specifically, as shown in FIG. 3, the workpiece W is placed on the flange part 23b of the workpiece supply means 23. Then, the cylinder rod 23a of the workpiece supply means 23 is extended while the support members 21 are retracted to a radial outside of the support members 21, and thus the workpiece W is lifted above the support members 21. Subsequently, the workpiece W is advanced radially inward of the support members 21, and thus the support members 21 support the workpiece W from below. After that, as the following workpiece W is sequentially supplied between the support members 21 and the workpiece W supported by the support members 21 through the procedure described above, an upward feeding force is applied to all the workpieces W supported by the support members 21. In this way, the workpiece W is inductively heated to the target temperature while being sent upward through the inner region of the heating coil 22 in the energized state, and is discharged to above the heating coil 22 (see FIGS. 3 and 4). The workpiece W that has completed to be heated and discharged to a region above the heating coil 22 is delivered to the internal space of the passage chamber 7 by an appropriate means (not shown), and then is sent to the internal space of the quenching preparation chamber 6 (that is, the second space B) by a transfer means (not shown) provided in the internal space of the passage chamber 7 (see FIGS. 3 and 4).

### (S3) Cooling step

In this step, as described above, the cooling treatment of cooling and quenching the workpiece W heated to the target temperature in the heating part 2 (heating step) is executed. Specifically, as shown in FIG. 5, first, the workpiece W transferred through the internal space of the passage chamber 7 is received so as to be placed on the upper end surface 34a of the lifting table 34. Next, the lifting unit 32 (see FIG. 2) of the press device 30 is driven to lower the pressurizing member 31 and the constraining die 33 attached and fixed to the lower end of the pressurizing member 31 integrally. The constraining die 33 is disposed on the outer periphery of the workpiece W placed on the upper end surface 34a of the lifting table 34 to be brought into a state immediately before starting to constrain the outer peripheral surface of the workpiece W with the constraining die 33. In this state, fitting between the outer peripheral surface of the workpiece W and the inner peripheral surface of the constraining die 33 is a clearance fit (see JIS B 0401-1), and the lower end surface of the constraining die 33 and the upper end surface 34a of the lifting table 34 are in contact with each other.

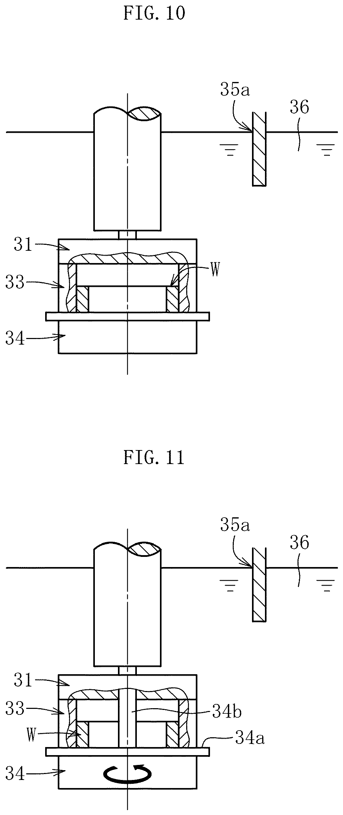

As described above, after the constraining die 33 is brought into the state immediately before starting to constrain the outer peripheral surface of the workpiece W, the pressurizing member 31, the constraining die 33, the workpiece W, and the lifting table 34 are integrally lowered and immersed in the cooling liquid 36 stored in the cooling liquid storage tank 35 as shown in FIG. 10. The workpiece W immersed in the cooling liquid 36 shows a deformation behavior that a diameter of the workpiece W is slightly reduced and then expanded. The workpiece W is therefore cooled while the outer peripheral surface of the workpiece W is constrained by the inner peripheral surface of the constraining die 33. In this embodiment, the workpiece W is quenched by being rapidly cooled at a predetermined temperature gradient. This can effectively prevent a reduction in shape accuracy of the outer peripheral surface (particularly, roundness of the outer peripheral surface) of the workpiece W due to cooling and quenching of the workpiece W.

When the lifting table 34 reaches a lower limit, the workpiece W is released from the constraining die 33. The constraining die 33 from which the workpiece W has been released moves upward together with the pressurizing member 31 and returns to the original position. On the other hand, the workpiece W released from the constraining die 33 is delivered out of the lifting table 34 by the delivery means (not shown) provided inside of the cooling liquid storage tank 35, as shown by a white arrow in FIG. 5 and received by the discharge means 37 (lifting table for discharging the workpiece). Then, the discharge means 37 is raised, and thus the workpiece W is discharged from the second opening 35b on a side of an upper opening of the cooling liquid storage tank 35 where the liquid surface of the cooling liquid 36 contacts the atmosphere, to above the cooling liquid storage tank 35 (outside the heat treatment device 1). This completes a quenching and hardening treatment for the workpiece W. The following workpiece W is also subjected to the quenching and hardening treatment through a similar path, and is discharged to the outside of the heat treatment device 1. As described above, the quenching and hardening treatment is continuously and automatically performed on the plurality of workpieces W.

Further, during the heating step S2 and the cooling step S3 of the workpiece W executed by the heating part 2 and the cooling part 3, respectively, the sealed space D is controlled to have a predetermined range of the oxygen concentration by the second control program of the control unit 45. Hereinafter, an example of the control flow will be described mainly with reference to FIG. 9.

### [Example of supply and exhaust control in heating and cooling steps]

First, in response to a command from the control unit 45, the oxygen concentration and the air pressure in the sealed space D are measured at regular intervals by the oxygen concentration measuring device 41 and the air pressure measuring device 42. In this initial state of the control, the air supply device 43 has not started to supply the non-oxidizing gas Ga into the sealed space D, and the exhaust device 44 has not exhausted the sealed space D.

When the measured oxygen concentration is equal to or higher than the oxygen concentration threshold value (100 ppm), and (1) the measured air pressure is equal to or higher than the air pressure upper threshold value (atmospheric pressure +100 Pa), the control unit 45 sends a control command to the air supply device 43 and the exhaust device 44 to stop supplying the non-oxidizing gas Ga to the sealed space D and continue to exhaust the sealed space D. In this embodiment, the command is sent to the air supply valve 46 and the exhaust pump 49 to close the air supply valve 46 and continue to drive the exhaust pump 49. This reduces the oxygen concentration in the sealed space D, and suppresses an air pressure rise or reduces the air pressure.

Alternatively, when the measured oxygen concentration is equal to or higher than the oxygen concentration threshold (100 ppm), and (2) the measured air pressure is equal to or lower than the air pressure lower threshold value (atmospheric pressure +1 Pa), the control unit 45 sends a control command to the air supply device 43 and the exhaust device 44 to continue to supply the non-oxidizing gas Ga to the sealed space D and stop exhausting the sealed space D. In this embodiment, the command is sent to the air supply valve 46 and the exhaust pump 49 to keep the air supply valve 46 open and stop driving the exhaust pump 49. This reduces the oxygen concentration in the sealed space D, and suppresses an air pressure decrease or increases the air pressure.

Alternatively, when the measured oxygen concentration is equal to or higher than the oxygen concentration threshold (100 ppm), and (3) the measured air pressure is higher than the air pressure lower threshold value (atmospheric pressure +1 Pa) and lower than the air pressure upper threshold value (atmosphere pressure +100 Pa), the control unit 45 sends a control command to the air supply device 43 and the exhaust device 44 to continue to supply the non-oxidizing gas Ga to the sealed space D and continue to exhaust the sealed space D. In this embodiment, the command is sent to the air supply valve 46 and the exhaust pump 49 to keep the air supply valve 46 open and continue to drive the exhaust pump 49. This reduces the oxygen concentration toward the target range while the air pressure is stable within an allowable range.

(4) When the measured oxygen concentration is lower than the oxygen concentration threshold value (100 ppm), and the supply and exhaust by the supply device 43 and the exhaust device 44 have already been performed by the second control program as described above, the control unit 45 sends a control command to the air supply device 43 and the exhaust device 44 to stop supplying the non-oxidizing gas Ga to the sealed space D and stop exhausting the sealed space D. In a state where the air supply device 43 and the exhaust device 44 have not yet been operated, a control command is sent to the air supply device 43 and the exhaust device 44 to maintain a state where neither of the devices is operated (including a case where no command is sent). In this way, the heating step S2 and the cooling step S3 for the workpiece W are continuously executed while the oxygen concentration and the air pressure in the sealed space D are stable within the predetermined ranges. This control ends, for example, although not shown, after the completion of the heating step S2 and the cooling step S3 that are repeatedly executed.

As described above, in the heat treatment method of the present invention, the non-oxidizing gas Ga is supplied to the sealed space D and the sealed space D is exhausted simultaneously in the preparation step S1 in which the atmosphere in the sealed space D is set to the non-oxidizing atmosphere before the heating step S2 to be in a state where the workpiece W can be carried into the sealed space D. This can increase a speed of the replacement with the non-oxidizing atmosphere, for example, as compared with a case where only the non-oxidizing gas Ga is supplied or a case where only the sealed space D is exhausted. This allows the heat treatment device 1 to start operating quickly, and the productivity to be improved. Further, the supply of the non-oxidizing gas Ga and the exhaust of the sealed space D are controlled in accordance with the air pressure in the sealed space D, and thus the air pressure in the sealed space D can be maintained within a preset range even when a supply amount or an exhaust amount is increased. It is therefore possible to quickly replace the atmosphere in the sealed space D with the non-oxidizing atmosphere while stabilizing a liquid level of the cooling liquid 36.

Further, in this embodiment, the exhaust pump 49 is applied to the exhaust device 44 and the exhaust pump 49 exhausts the sealed space D. This can further increase a speed of exhausting the sealed space D. This allows the replacement with the non-oxidizing atmosphere to be performed in a shorter time.

Further, in this embodiment, during the heat treatment of the workpiece W (heating step S2 and cooling step S3), the oxygen concentration in the sealed space D is measured, and on the basis of the measured oxygen concentration value, the supply of the non-oxidizing gas Ga into the sealed space D is controlled, and the exhaust of the sealed space D is controlled. Thus, the supply of the non-oxidizing gas Ga and the exhaust of the sealed space D can be appropriately selected and executed in accordance with the oxygen concentration in the sealed space D. Therefore, for example, by exhausting the sealed space D while minimizing a use amount of the non-oxidizing gas Ga, the oxygen concentration in the sealed space D can be kept within a certain range (lower than 100 ppm). Further, the supply of the non-oxidizing gas Ga and the exhaust of the sealed space D can be performed together, and thus the oxygen concentration in the sealed space D quickly returns to fall within the allowable range (a concentration that becomes a non-oxidizing atmosphere, for example, lower than 100 ppm.). As described above, according to the present invention, the oxygen concentration in the sealed space D can be stabilized during the heat treatment of the workpiece W without increasing the cost or lowering the productivity.

Although the heat treatment method and the heat treatment device 1 according to one embodiment of the present invention have been described, the heat treatment device 1 can be appropriately modified without departing from the gist of the present invention.

For example, in the above-described embodiment, the supply and exhaust control in the preparation step S1 has been described, in which the air pressure in the sealed space D is measured at regular intervals, and only when the measured air pressure is within the predetermined range (higher than the atmospheric pressure +1 Pa and lower than +100 Pa), the oxygen concentration in the sealed space D is measured in addition to the air pressure in the sealed space D and the driving of the air supply device 43 and the exhaust device 44 is controlled in accordance with the measured oxygen concentration value (see FIG. 8). However, of course, a control mode is not limited thereto. For example, although not shown, the oxygen concentration and the air pressure in the sealed space D are measured at regular intervals, and the drive of the air supply device 43 and the drive of the exhaust device 44 respectively may be controlled in accordance with the measured values of the oxygen concentration and the air pressure.

Further, in the above embodiment, the control of the air supply device 43 and the exhaust device 44 by the control unit 45 have been described, in which two types of driving and stopping of the air supply device 43 (open and closed states of the air supply valve 46) and driving and stopping of the exhaust device 44 (driving and stopping of the exhaust pump 49) are selectively controlled. However, of course, other control modes can be employed. Specifically, although not shown, when a configuration including the air supply valve 46 is employed as the air supply device 43, by applying, to the air supply valve 46, a valve capable of adjusting a supply amount (supply flow rate) of the non-oxidizing gas Ga, which is for example, an electric valve whose opening degree can be electrically controlled, an increase or decrease in the supply amount of the non-oxidizing gas Ga can be adjusted. Similarly, when a configuration including the exhaust pump 49 is employed as the exhaust device 44, by applying, to the exhaust pump 49, a pump capable of adjusting the exhaust amount of the sealed space D, which is for example, an electric pump incorporating a motor that can electrically control the number of rotations therein, an increase or decrease in the exhaust amount can be adjusted. According to the heat treatment device 1 of the present invention, although a volume of the sealed space D can be reduced, there is a possibility that so-called large pulsation may occur when the supply and exhaust control is performed as described above. On the other hand, the pulsation can be suppressed to be small by controlling the driving and stopping including a fine adjustment for increasing or decreasing the supply amount and the exhaust amount as described above. It is therefore possible to quickly replace the atmosphere in the sealed space D with the non-oxidizing atmosphere while further stabilizing the oxygen concentration and the air pressure in the sealed space D.

Advantages of the supply amount of the air supply device 43 and the exhaust amount of the exhaust device 44 being electrically adjustable are as follows. That is, as in this embodiment, when performing the supply and exhaust control during the preparation step S1 (first replacement step S 11) and performing the supply and exhaust control during the heating step S2 and the cooling step S3, a required supply amount or exhaust amount differs between the former case and the latter case. That is, in the former case (preparation step S1), the oxygen concentration in the sealed space D needs to be reduced in a short time from a state of being close to the oxygen concentration in the atmosphere to a state of being lower than a predetermined oxygen concentration threshold value (100 ppm). The required supply amount or exhaust amount is therefore significantly large. On the other hand, in the latter case (heating step S2 and cooling step S3), heating and cooling treatments are repeatedly performed while the oxygen concentration in the sealed space D is once reduced to below the predetermined oxygen concentration threshold (100 ppm). As a result, even when the oxygen concentration in the sealed space D fluctuates every time the workpiece W is carried in and out, the oxygen concentration in the sealed space D is still considerably lower than the oxygen concentration in the atmosphere, and the required supply amount or exhaust amount can be relatively small. For the above reasons, for example, when the air supply valve 46 capable of adjusting the opening degree is applied to the air supply device 43, the opening degree is preferably basically set to a maximum (full opening) in the preparation step S1, and the opening degree is preferably set to an intermediate level (the opening is smaller than in the preparation step S1) in the heating step S2 and the cooling step S3 Further, when the exhaust pump 49 capable of adjusting the flow rate is applied to the exhaust device 44, the exhaust pump 49 is preferably driven in a relatively high flow rate region in the preparation step S1, and the exhaust pump 49 is preferably driven in a middle flow rate region or a low flow rate region in the heating step S2 and the cooling step S3. Thus, by using the common supply and exhaust control system 40 (air supply device 43 and exhaust device 44), the supply and exhaust control in the preparation step S 1 and the supply and exhaust control during the heat treatment (heating step S2 and cooling step S3) can be performed with high accuracy.

Of course, a configuration of the air supply device 43 and the exhaust device 44 is arbitrary, and devices other than the air supply valve 46 and the exhaust pump 49 can be applied. For example, a known gas supply means such as a pressure pump or a fan can be applied to the air supply device 43.

Further, in a structure of the cooling part 3, the cooling part 3 can be provided with a rotating mechanism that integrally rotates the workpiece W and the constraining die 33 constraining the workpiece W around the axis of the workpiece W in the cooling liquid 36. FIG. 11 illustrates an example of the structure, in which the rotating mechanism is provided on the lifting table 34. In this case, the pressurizing member 31 is provided idly rotatably around the axis of the workpiece W, and the lifting table 34 is provided with a pin 34b fitted to the pressurizing member 31. The lifting table 34 is rotatably driven while the lifting table 34 and the pressurizing member 31 fitted with the pin 34b provided on the lifting table 34 are immersed in the cooling liquid 36. Thus, the workpiece W and the constraining die 33 can be integrally rotated around the axis of the workpiece W provided between the pressurizing member 31 and the lifting table 34. This can uniformly cool the workpiece W immersed in the cooling liquid 36, and further improve the shape accuracy of the workpiece W after quenching is completed.

Although not shown in detail, in addition to or in place of the rotating mechanism described above, the cooling part 3 may be provided with a stirring mechanism that stirs the cooling liquid 36 when at least the workpiece W is immersed in the cooling liquid 36. This is advantageous in uniformly cooling the workpiece W immersed in the cooling liquid 36, as in the case where the rotating mechanism is provided in the cooling part 3.

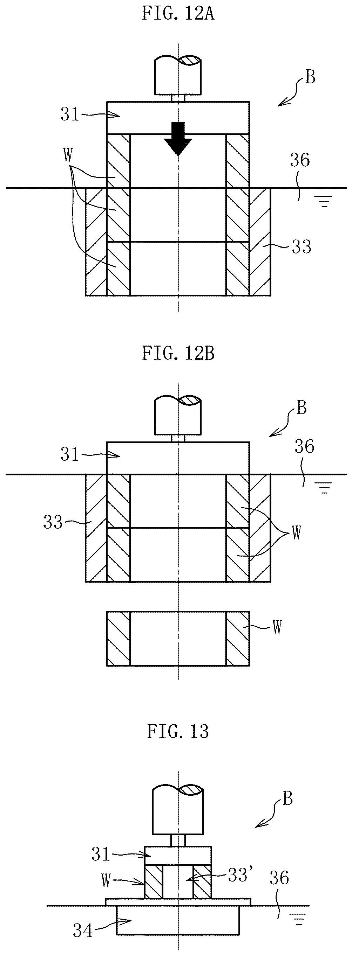

Further, the constraining die 33 is attached and fixed to the pressurizing member 31 of the press device 30 as in the embodiment described above, or alternatively, can be also fixed and disposed in the cooling liquid 36 as shown in FIGS. 12A and 12B. The constraining die 33 shown in FIGS. 12A and 12B constrains the outer peripheral surface of the workpiece W with the inner peripheral surface of the constraining die 33, and has an axial dimension obtained by adding the axial dimensions of two workpieces W. In this case, the workpiece W transferred to the internal space (second space B) of the quenching preparation chamber 6 is disposed above the constraining die 33 (the workpiece W pressed into the inner periphery of the constraining die 33). Subsequently, as the pressurizing member 31 moves downward and is pressed downward, the workpiece W is immersed into the cooling liquid 36 and the outer peripheral surface of the workpiece W is constrained by the constraining die 33 simultaneously. Then, as shown in FIG. 12B, as the following workpiece W is completely pushed into the inner periphery of the constraining die 33, the lower workpiece W of the two workpieces W disposed on the inner periphery of the constraining die 33 is released from the constraining die 33. When this constraining die 33 is employed, "a treatment of bringing into a state immediately before starting to constrain the outer peripheral surface of the workpiece W" in the present invention refers to the treatment of bringing a lower end surface of the pressurizing member 31 into contact with an upper end surface of the workpiece W transferred to the second space B. In this case, the lifting table 34 used in the embodiment described above is not necessary, but an appropriate receiving member that receives the released workpiece W may be disposed directly below the pressurizing member 31.

In the above description, (a base material of) an outer ring of a rolling bearing is given as an example of the workpiece W, and the heat treatment device 1 is used in the case where the workpiece W is cooled and quenched while the outer peripheral surface of the workpiece W is constrained by the constraining die 33. However, the heat treatment device 1 can be also preferably used in a case where the workpiece W in which the shape accuracy (particularly roundness) of the inner peripheral surface is preferably prevented from being collapsed due to quenching (for example, a base material of an inner ring of a rolling bearing) is subjected to the quenching and hardening treatment. FIG. 13 illustrates an example of the above case, in which a constraining die 33' capable of constraining the inner peripheral surface of the workpiece W is attached and fixed to the lower end surface of the pressurizing member 31.

In this case, an operation mode of the cooling part 3 configuring the heat treatment device 1 and a mode of a shape change of the workpiece W due to the immersion in the cooling liquid 36 are basically similar to the embodiment described with reference to FIGS. 5 and 10. In short, when the workpiece W is immersed in the cooling liquid 36, the diameter of the workpiece W is first reduced and then expanded. Thus, the inner peripheral surface of the workpiece W is constrained by the constraining die 33' in the initial stage of being immersed in the cooling liquid 36, but is basically not constrained by the constraining die 33' in the stage of being released. Consequently, the shape accuracy of the inner peripheral surface of the workpiece W cannot be as high as that when the outer peripheral surface of the workpiece W is constrained by the constraining die 33 described above. However, the inner peripheral surface of the workpiece W is temporarily constrained by the outer peripheral surface of the constraining die 33' during the cooling and quenching of the workpiece W, and thus the shape accuracy of the inner peripheral surface of the workpiece W is improved as compared with the case where a so-called die-constrained hardening employed in the present invention is not employed.

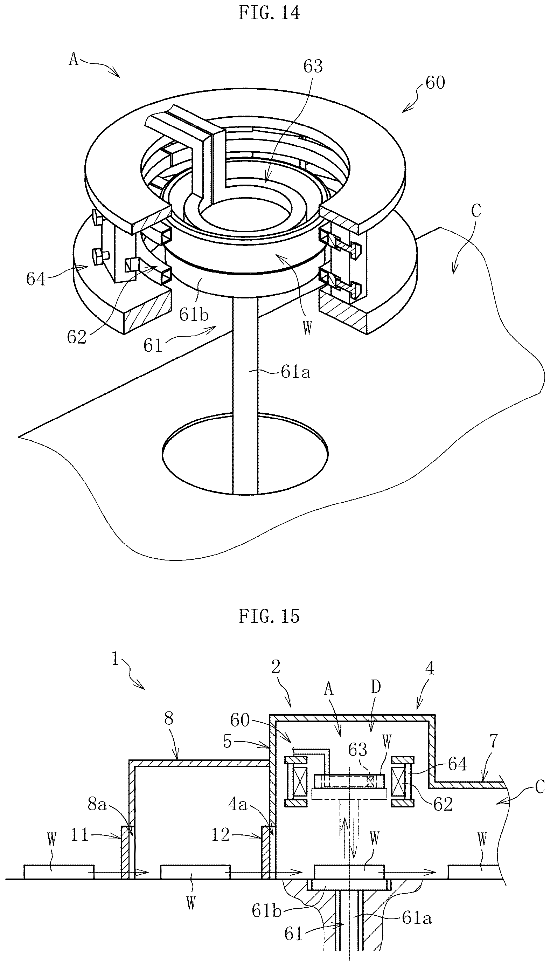

Further, the heating device 20 provided in the heating part 2 of the heat treatment device 1 described in the above embodiment is merely an example, and another heating device can be used. FIG. 14 illustrates an example of such a heating device, and is a partial perspective view of a heating device 60 according to another embodiment of the present invention. The heating device 60 shown in FIG. 14 is a heating device configured to be able to inductively heat the workpiece W one by one, and includes a support member 61 having a telescopic cylinder rod 61a provided with a flange part 61b that can place the workpiece W at a tip of the flange part 61b, an outer diameter side coil 62 located on an outer diameter side of the workpiece W, and an inner diameter side coil 63 located on an inner diameter side of the workpiece W. Both of the coils 62 and 63 are disposed coaxially with the cylinder rod 61a. The outer diameter side coil 62 is held by a coil holding member including an insulating material indicated by a reference numeral 64.

When the heating device 60 shown in FIG. 14 is employed, the workpiece W put into the internal space (first space A) of the heating chamber 5 is inductively heated as follows and carried out to the internal space of the passage chamber 7 (passage C).

First, as shown in FIG. 15, the atmosphere in the sealed space D is made into the non-oxidizing atmosphere, and the atmosphere in the replacement chamber 8 into which the workpiece W is put is made into the non-oxidizing atmosphere. Then, the inlet side opening 4a is opened and the workpiece W is carried in the first space A of the sealed space D. Subsequently, after the workpiece W that has been carried in is placed on the flange part 61b of the support member 61, the inlet side opening 4a is closed, and the cylinder rod 61a of the support member 61 is extended. Thus, the workpiece W placed on the flange part 61b is raised, introduced between the outer diameter side coil 62 and the inner diameter side coil 63 in an energized state, and held at this position for a predetermined period of time. The workpiece W is thus inductively heated to the target temperature. After the heating of the workpiece W is completed, the cylinder rod 61a of the support member 61 is shortened, and the heated workpiece W is lowered together with the flange part 61b. Then, when the workpiece W reaches a predetermined position in a vertical direction, the workpiece W after the completion of the heating is delivered toward the passage C by an appropriate means (not shown). In FIG. 15, the workpiece W after the completion of the heating can be delivered to the passage C at an equal height level to the position where the workpiece W is introduced into the support member 61. In this case, the following workpiece W can be introduced onto the flange part 61b of the support member 61 simultaneously when the workpiece W is delivered. This enables the workpiece W to be inductively heated by the heating device 60 efficiently.

Also in this case, by applying the heat treatment method or the heat treatment device 1 of the present invention, it is possible to improve the productivity of the heat treatment by replacing the atmosphere in the sealed space for the heating treatment and the cooling treatment with the non-oxidizing atmosphere in a short time while suppressing a fluctuation of the liquid level of the cooling liquid. When the heating device 60 having the above configuration is employed, there are advantages that the height of the sealed chamber 4 (particularly, the heating chamber 5) can be reduced and the heat treatment device 1 can be made compact as compared with the case where the heating device 20 shown in FIGS. 3, 4, and the like is employed.

Further, the case has been described where the heat treatment device 1 of the present invention is applied when the bearing ring (outer ring or inner ring) of the rolling bearing is quenched and hardened. However, the heat treatment device 1 of the present invention can be preferably applied when another annular workpiece which is, for example, a sliding bearing, an outer joint member or an inner joint member configuring a constant velocity universal joint, or (a base material of) a cage incorporated in a rolling bearing or a constant velocity universal joint is subjected to the quenching and hardening treatment.

In the above description, the case where the workpiece W is subjected to the quenching treatment by performing the predetermined heating treatment and cooling treatment. However, the present invention can be of course applied to a heating treatment other than quenching.

The present invention is not limited to the above-described embodiments at all, and may be implemented in various other forms without departing from the gist of the present invention. That is, the scope of the present invention is defined by the claims, and further includes equivalent meanings described in the claims, and all modifications within the claims.

## Claims

1. A workpiece heat treatment method comprising:
a heating step of heating a workpiece; and
a cooling step of cooling the workpiece that has been heated in the heating step by immersing the workpiece in a cooling liquid, and performing a predetermined heat treatment on the workpiece,
wherein an inlet side opening for the workpiece is provided in a first space in which the heating step is executed, and an outlet side opening for the workpiece is provided in a second space that is connected to the first space and is in contact with a liquid surface of the cooling liquid,
the heating step and the cooling step are executed while the first space and the second space are both sealed by closing the inlet side opening and the outlet side opening with the liquid surface of the cooling liquid to set this sealed space to a non-oxidizing atmosphere,
the method further includes a preparation step of making an atmosphere of the sealed space into a non-oxidizing atmosphere before the heating step to be in a state where the workpiece can be carried into the sealed space, and
a non-oxidizing gas is supplied to the sealed space and the sealed space is exhausted simultaneously, and the supply and exhaust are controlled in accordance with an air pressure in the sealed space in the preparation step.

2. The workpiece heat treatment method according to claim 1, wherein the air pressure in the sealed space is measured, and when the measured air pressure is equal to or higher than an air pressure upper threshold value, the supply of the non-oxidizing gas to the sealed space is stopped, and the exhaust of the sealed space is continued.

3. The workpiece heat treatment method according to claim 1, wherein the air pressure in the sealed space is measured, and when the measured air pressure is equal to or lower than an air pressure lower threshold value, the supply of the non-oxidizing gas to the sealed space is continued, and the exhaust of the sealed space is stopped.

4. The workpiece heat treatment method according to claim 1, wherein the air pressure in the sealed space is measured, and when the measured air pressure is higher than an air pressure lower threshold value and lower than an air pressure upper threshold value, an oxygen concentration in the sealed space is measured, and when the measured oxygen concentration is equal to or higher than an oxygen threshold value, the supply of the non-oxidizing gas to the sealed space is continued and the exhaust of the sealed space is continued.

5. The workpiece heat treatment method according to claim 1, wherein the air pressure in the sealed space is measured, and when the measured air pressure is higher than an air pressure lower threshold value and lower than an air pressure upper threshold value, an oxygen concentration in the sealed space is measured, and when the measured oxygen concentration is lower than an oxygen threshold value, the supply of the non-oxidizing gas to the sealed space is stopped and the exhaust of the sealed space is stopped.

6. The workpiece heat treatment method according to any one of claims 1 to 5, wherein the air pressure in the sealed space is measured at regular intervals, and when the measured air pressure is higher than an air pressure lower threshold value and lower than an air pressure upper threshold value, an oxygen concentration in the sealed space is measured, and the supply of the non-oxidizing gas to the sealed space and the exhaust of the sealed space are repeatedly controlled until the measured oxygen concentration is lower than an oxygen threshold value.

7. The workpiece heat treatment method according to any one of claims 1 to 6,
wherein the workpiece is carried into a replacement chamber adjacent to the first space through the inlet side opening while the inlet side opening is closed, and
the atmosphere in the sealed space is made into the non-oxidizing atmosphere, an atmosphere in the replacement chamber is replaced from an air atmosphere to the non-oxidizing atmosphere, and subsequently, the inlet side opening is opened, and the workpiece is carried into the sealed space.

8. The workpiece heat treatment method according to any one of claims 1 to 7, wherein the workpiece is inductively heated to a target temperature in the heating step, and the workpiece that has been heated is cooled and quenched in the cooling step.

9. The workpiece heat treatment method according to any one of claims 1 to 8, wherein the workpiece is an annular ring of a rolling bearing.

10. A workpiece heat treatment device comprising:
a heating part that heats a workpiece; and
a cooling part that cools the workpiece that has been heated by the heating part by immersing the workpiece in a cooling liquid, and performing a predetermined heat treatment on the workpiece,
wherein the heating part has a first space in which the workpiece is heated, and the cooling part has a second space that is connected to the first space and is in contact with a liquid surface of the cooling liquid,
the first space is provided with an inlet side opening for the workpiece, and the second space is provided with an outlet side opening for the workpiece, and
the first space and the second space are both sealed by closing the inlet side opening and closing the outlet side opening with the liquid surface of the cooling liquid, and this sealed space is made into a non-oxidizing atmosphere,
the workpiece heat treatment device further comprising:
an air pressure measuring device that measures an air pressure in the sealed space;
an air supply device that supplies a non-oxidizing gas to the sealed space;
an exhaust device that exhausts the sealed space; and
a control unit that supplies the non-oxidizing gas to the sealed space by the air supply device and exhausts the sealed space by the exhaust device simultaneously, and controls the supply and exhaust in accordance with the air pressure measured by the air pressure measuring device.
